# EUROPEAN PATENT APPLICATION

(11) **EP 3 557 045 A1**
(43) Date of publication of application: **23.10.2019**
(21) Application number: 18168469.7
(22) Date of filing: 20.04.2018
(51) Int. Cl.: F03D 1/06

(54) **ROOT SEGMENT FOR A SEGMENTED ROTOR BLADE OF A WIND TURBINE INSTALLATION AND A SEGMENTED ROTOR BLADE WITH THE ROOT SEGMENT**

(71) Applicant: youWINenergy GmbH, 27568 Bremerhaven (DE)
(72) Inventor: Rohden, Rolf, 26607 Aurich (DE)
(74) Representative: Bird & Bird LLP

(57) **Abstract**

Root segment for a segmented rotor blade of a wind turbine installation, the root segment extending along a longitudinal axis A, having a second axial end which is arranged to be mechanically connected with a rotor hub of the wind turbine installation, wherein a cross section through the root segment perpendicular to axis A has an aerofoil shape.

## Description

The present invention relates to a root segment for a segmented rotor blade of a wind turbine installation and a segmented rotor blade with the root segment.

A rotor blade known to the applicant comprises several segments. One of the segments is a root segment arranged for being mechanically connected with the rotor hub of the wind turbine installation. Another blade segment is designed as a winglet at the opposite end of the rotor blade. The known rotor blade also has an intermediate blade segment. A generator arranged for providing electrical energy can be mechanically connected to and driven by the rotor hub.

### Problem and solution

The output from some wind turbine installations may be considered insufficient.

It is an object of the present invention to provide a rotor blade that can improve the output of the superordinate wind turbine installation.

The above object is solved by the root segment according to claim 1 (first aspect) and by a segmented rotor blade comprising the root segment (second aspect). Preferred embodiments of the invention form the respective subject matter of the depending claims.

According to the first aspect, the root segment is arranged for being a segment of a segmented rotor blade of a wind turbine installation. The root segment extends along a longitudinal axis A and has a second axial end which is arranged to be mechanically connected with a rotor hub of the wind turbine installation. A cross section through the root segment perpendicular to axis A has an aerofoil shape.

When the output of a wind turbine installation is considered to be insufficient, a remedy is to lengthen the rotor blades. This may require to furnish the wind turbine installation with a higher tower and to space the rotor hub further apart from the tower.

The root segment of an assembled rotor blade can form up to 20% of the rotor blade's entire length. If at least a section of the root segment has an aerofoil shape, then the root segment can contribute to driving the generator connected to the rotor hub to which the rotor blade comprising the root segment is connected. Thus, the output of the superordinate wind turbine installation can be improved without lengthening the rotor blades. Further, reinforcing measures for limiting the deformation of a lengthened rotor blade during operation because of the wind load can be avoided with the claimed root segment. The root segment may help to save material and cost of the rotor blade.

Within the concept of the present invention, a blade segment is arranged to form a part of a segmented rotor blade of a wind turbine installation. The blade segment extends along a longitudinal axis and has a segment wall limiting a cavity. The cavity is accessible through at least one axial end. At least at one axial position of the blade segment, a cross section through the blade segment has an aerofoil shape. The blade segment can be arranged for being mechanically connected to another blade segment. The blade segment can be a root segment. The blade segment can be made with a resin, a fabric, fibres and/or rovings. If the blade segment is a root segment, the root segment can have a length of up to 20% of the length of the entire rotor blade having the root segment.

Within the concept of the present invention, a blade pitch mechanism is arranged to set, alter and/or adjust the pitch of a blade segment with respect to the wind streaming about the blade segment. The blade pitch mechanism can comprise a bearing, a shaft being supported rotatably by the bearing and having a rotational axis B, and a pitch motor connected to the shaft and arranged for rotating the shaft about axis B. A part of the blade pitch mechanism can be held or supported by the root segment. The pitch mechanism can have a length of up to 7% of the length of the entire rotor blade having the root segment and the pitch mechanism.

### Preferred embodiments

Unless stated otherwise, the following embodiments can be combined with each other, advantageously.

A preferred embodiment comprises a first support structure inside a cavity of the root segment, wherein the first support structure is arranged for supporting and for being mechanically connected with at least one bearing of a blade pitch mechanism. The first support structure can be dimensioned to support and be mechanically connected with two bearings of the pitch mechanism spaced apart from each other along axis A. The first support structure can be materially connected with a segment wall of the root segment. The root segment and/or the first support structure can be made with a metal, steel, resin, a fabric, fibres and/or rovings. This may increase the durability and/or mechanical stability of the root segment. Further, the segment wall of the root segment can help to protect the bearings from dirt and moisture.

Another preferred embodiment comprises a second support structure inside the cavity, wherein the second support structure is arranged for supporting and for being mechanically connected with a pitch motor of the blade pitch mechanism. The second support structure can be arranged to absorb a counter torque occurring during operation of the pitch motor and/or arranged to fix a stator of the pitch motor. The second support structure and the segment wall can be materially connected. The root segment and/or the second support structure can comprise a metal or steel. The root segment and/or the second support structure can comprise resin, a fabric, fibres and/or rovings. This may increase the durability and/or mechanical stability of the root segment. Further, the segment wall of the root segment can help to protect the pitch motor from dirt and moisture.

According to another preferred embodiment, the root segment has two of the first support structures which are spaced apart along axis A and a second support structure. The second support structure is positioned between the two first support structures. This may help to better absorb forces and torques by two spaced apart bearings during operation of the wind turbine installation.

In another preferred embodiment, the root segment comprises an aerofoil first profile at a first axial position along axis A and an aerofoil second profile at a second axial position, wherein the first profile is different from the second profile. The first axial position may be closer to the second axial end of the root segment than the second axial position. This may improve the exploitation of the wind streaming about the segmented rotor blade. Preferably, a thickness T of the first profile perpendicular to a chord of the first profile is greater than a thickness of the second profile perpendicular to a chord of the second profile.

Preferably, the thickness T of the first profile is greater than the outer diameter of the at least one bearing of the pitch mechanism. This may help to provide sufficient space inside the root segment to accept and support the at least one bearing of the pitch mechanism. The ratio of the thickness T of the first profile perpendicular to the chord of the first profile divided by the chord length C of the first profile at the same first axial position, preferably adjacent to the second axial end, can be as follows: 0,5 ≤ T/C ≤ 0,55. This may allow to position the rotational axis of the at least one bearing closer to axis A.

Another preferred embodiment comprises one or more elongated fastening elements, which are arranged for connecting with the rotor hub, which extend from the second axial end, preferably along axis A, preferably into a wall section or segment wall of the root segment. Some of the elongated fastening elements can comprise a recess extending into the segment wall or a protrusion extending from the second axial end into the environment. The elongated fastening element can have a thread. This may simplify connecting the root segment to the rotor hub.

According to the second aspect, a segmented rotor blade comprises the root segment and the blade pitch mechanism. The blade pitch mechanism is arranged for changing a pitch angle of a second blade segment, which can be mechanically connected to the root segment. At least one bearing of the pitch mechanism is supported by and mechanically connected with the first support structure of the root segment. A shaft of the pitch mechanism is rotatably held and supported by the at least one bearing, and a rotational axis B of the shaft aligns with axis A. The at least one bearing can be a slew bearing. The shaft is arranged for being mechanically connected with the second blade segment. A pitch motor of the pitch mechanism is mechanically connected with the shaft for driving the shaft to rotate in the bearing about axis B.

Particularly if the root segment has an aerofoil shape and is dimensioned to contain the bearing of the pitch mechanism, a segmented rotor blade comprising this root segment need not be lengthened for improved exploitation of the wind.

Preferably, the root segment has two of the first support structures which are spaced apart along axis A and which support and hold two spaced apart bearings of the blade pitch mechanism. This may help to better absorb forces and torques by two spaced apart bearings during operation of the wind turbine installation.

Preferably, the pitch motor is supported by and mechanically connected with the second support structure of the root segment. This may allow to reduce the size of a housing of the rotor hub and/or can permit to arrange the root segment closer to the rotational axis of the rotor hub. The pitch motor can be arranged between two of the first support structures which are spaced apart along axis A and which support and hold two spaced apart bearings of the blade pitch mechanism.

Alternatively, the shaft extends beyond the second axial end of the root segment into a housing surrounding the rotor hub and the pitch motor can be supported inside the housing.

In a preferred embodiment, a first shaft end of the shaft perpendicular to axis B has an aerofoil shape, wherein the first shaft end is arranged for being mechanically connected with the second blade segment. The first shaft end can extend beyond an axial end of the root segment opposite of the second axial end. This can simplify connecting a second blade segment to the shaft. The shaft can have a cylindrical shaft section and a tapered shaft section, the latter comprising the first shaft end. The cylindrical shaft section and the tapered shaft section can be materially connected. Alternatively, the cylindrical shaft section and the tapered shaft section can be separate bodies forming the shaft when they are mechanically connected. This may offer the liberty of using different materials for the two bodies.

According to another preferred embodiment, the shaft comprises a shaft section including the first shaft end, wherein the shaft section is made with a metal or steel. The shaft section including the first shaft end can be made with resin, a fabric, fibres and/or rovings. This shaft section can be identical to the tapered shaft section mentioned above. With this embodiment, connecting a second blade segment to the shaft can be simplified and/or the weight of the shaft can be reduced.

Another preferred embodiment comprises the second blade segment, which is mechanically connected to the first end of the shaft, wherein a cross section through the second blade segment and perpendicular to axis A has an aerofoil shape. The cross section of the first end of the shaft can be similar to the end face of the second blade segment that is connected with the shaft. The pitch angle of the second blade segment can be changed and set by the pitch mechanism. To this end, the pitch motor can be activated to rotate the shaft, to which the second blade segment is mechanically connected. The second blade segment can rotate relative to the root segment because of the pitch mechanism. This can help to improve the exploitation of the wind.

Preferably, the second blade segment comprises an aerofoil third profile at a first axial position of the second blade segment along axis A and an aerofoil fourth profile at a second axial position of the second blade segment, wherein the third profile is different from the fourth profile. This may improve the exploitation of the wind streaming about the segmented rotor blade.

A further preferred embodiment comprises a third blade segment mechanically connected with an end of the second blade segment and aligned with axis A, wherein a cross section through the third blade segment and perpendicular to axis A has an aerofoil shape. As third blade segment is connected with the second blade segment, the blade segments rotate simultaneously when the pitch motor is activated to adjust the pitch angle. This may improve the exploitation of the wind streaming about the segmented rotor blade. Furnishing the segmented rotor blade with the third blade segment may simplify transporting the parts of the wind turbine installation to its intended installation site.

In another preferred embodiment, a tip segment or winglet is mechanically connected with an end of the second blade segment or with an end of the third blade segment. The tip segment or winglet can improve the exploitation of the wind. The separate tip segment or winglet may simplify the transport to the installation site and reduce the cost of transport.

### Exemplary embodiments

Further advantages of the invention become apparent from the following figures showing exemplary embodiments.

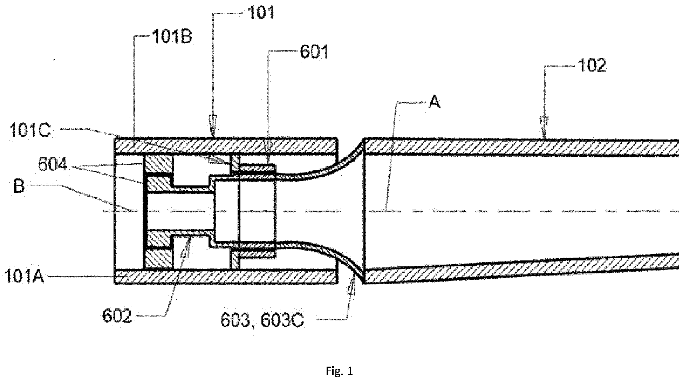

Figure 1 shows an embodiment of a root segment 101 which is arranged for being a segment of a segmented rotor blade of a wind turbine installation. The root segment extends along a longitudinal axis A and has a second axial end 101A which is arranged to be mechanically connected with a rotor hub (not shown) of a superordinate wind turbine installation. A cross section through the root segment 101 perpendicular to axis A has an aerofoil shape.

The root segment 101 comprises a first support structure 101C for supporting at least one bearing 601 of a pitch mechanism. The first support structure is materially connected with the segment wall of the root segment. Further, the root segment comprises a second support structure 101B for supporting a pitch motor 604 of the pitch mechanism. The root segment has an aerofoil first profile near its second axial end 101A and the thickness of the first profile perpendicular to a chord of the first profile is greater than the outer diameter of the bearing 601. So, there is sufficient space inside the root segment to accept and support the at least one bearing.

Further, figure 1 shows a part of a segmented rotor blade having the root segment 101, the pitch mechanism 601, 602, 603, 604 and a second blade segment 102, which is mechanically connected to the first shaft end 603B, also for pitching the second blade segment.

The pitch mechanism as shown in figure 1 comprises the bearing 601, the shaft 603 and the pitch motor 604. The bearing 601 is supported by the first support structure 101C and the pitch motor, which is mechanically connected with the shaft 602, is supported by the second support structure 101B. The second support structure 101C is arranged and dimensioned to absorb a counter torque at least while the pitch motor is active. The shaft is supported rotatably by the bearing 601 to rotate about its axis B and extend beyond the root segment's end opposite of the second axial end. The shaft has a first shaft end 603B the cross section of which resembles the cross section of the second blade segment 102. The second blade segment is mechanically connected with the first end 603B of the shaft. Axis B, axis A and the longitudinal axis of the second blade segment are aligned.

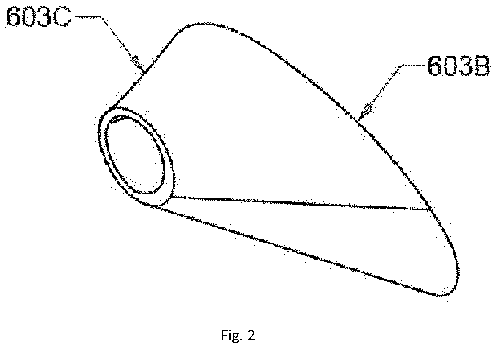

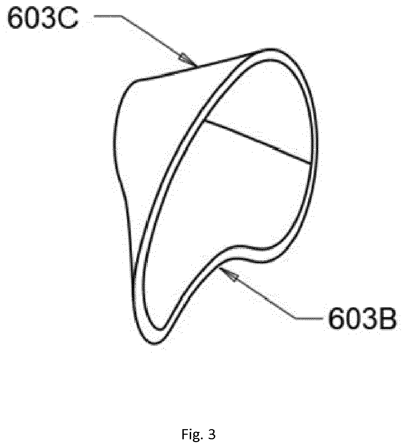

Figure 2 shows a shaft section 603C of the shaft of figure 2. The shaft section is tapered from a circular end (on the left) towards the first shaft end 603B having an aerofoil shape. The first shaft end is arranged to be connected with a second blade segment of the same rotor blade. Figure 3 shows the shaft section 603C from a different perspective.

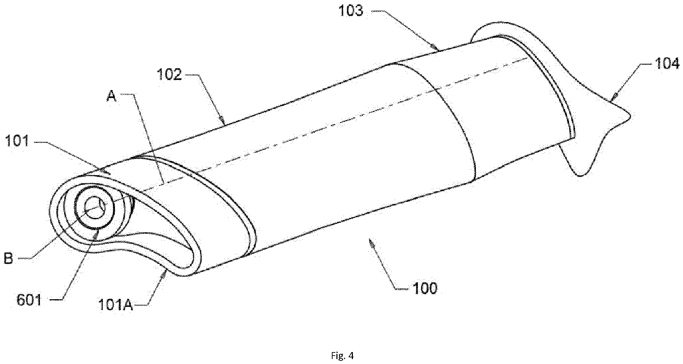

Figure 4 shows an embodiment of the segmented rotor blade 100 comprising the root segment as shown in figure 1. The bearing 601 supported by and held in the root segment 101 is visible through the opening at the second axial end 101A of the root segment. The aerofoil profile at the second axial end 101A is dimensioned such that the cavity inside the root segment 101 is larger than the bearing 601. The second blade segment 102 can rotate relative to the root segment 101 for improved exploitation of the wind.

The segmented rotor blade further comprises a third blade segment 103 and a winglet 104. An end of the third blade segment is mechanically connected with the second blade segment 102 and can rotate with it. The winglet is mechanically connected with another end of the third blade segment. The blade segments 101, 102, 103 have aerofoil profiles at several of its respective axial positions along axis A.

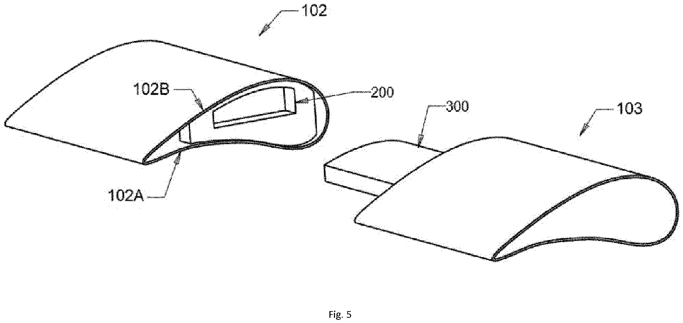

Figure 5 shows an embodiment of the second blade segment 102 having a supporting device 200 that is mechanically or materially connected inside the second blade segment 102 adjacent to the end of the facing second blade segment the third blade segment 103. The supporting device 200 has a recess arranged for accepting a protrusion 300 extending from the third blade segment. The protrusion can be materially or mechanically connected with the third blade segment. The protrusion can extend into the third blade segment for improved absorption of forces and torques.

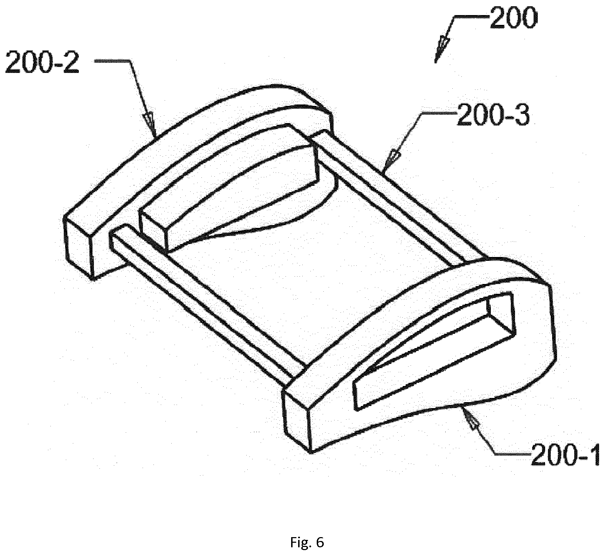

Figure 6 shows the supporting device 200 of figure 5 in detail. The supporting device 200 has two panels 200-1, 200-2 which are mechanically connected with each other and spaced apart from each other by struts 200-3. The first panel 200-1 has the recess for accepting the protrusion. The second panel 200-2 has a projection extending towards the first panel and arranged for engaging with the protrusion. Both panels are arranged for being materially or mechanically connected with the second blade segment inside its cavity.

## Claims

1. Root segment (101) arranged for being a segment of a segmented rotor blade of a wind turbine installation, the root segment extending along a longitudinal axis A and having a second axial end (101A), which is arranged to be mechanically connected with a rotor hub of the wind turbine installation, wherein a cross section through the root segment perpendicular to axis A has an aerofoil shape.

2. Root segment according to claim 1, comprising a first support structure (101C) inside a cavity of the root segment, wherein the first support structure is arranged for supporting and for being mechanically connected with at least one bearing (601) of a blade pitch mechanism (600).

3. Root segment according to claim 2, comprising a second support structure (101B) inside the cavity, wherein the second support structure is arranged for supporting and for being mechanically connected with a pitch motor (604) of the pitch mechanism (600).

4. Root segment according to one of the preceding claims, wherein the root segment comprises an aerofoil first profile at a first axial position along axis A and an aerofoil second profile at a second axial position, wherein the first profile is different from the second profile.

5. Root segment according to claim 4, wherein a thickness of the first profile perpendicular to a chord of the first profile is greater than a thickness of the second profile perpendicular to a chord of the second profile.

6. Root segment according to one of the preceding claims, wherein an elongated fastening element, arranged for connecting with the rotor hub, extends from the second axial end, preferably along axis A, preferably into a wall section of the root segment.

7. Segmented rotor blade (100), comprising the root segment (101) according to one of the preceding claims and the blade pitch mechanism (600), which is arranged for changing a pitch angle of a second blade segment (102),
wherein the at least one bearing (601) of the pitch mechanism is supported by and mechanically connected with the first support structure (101C) of the root segment,
wherein a shaft (603) of the pitch mechanism is rotatably held and supported by the at least one bearing, and a rotational axis B of the shaft aligns with axis A,
wherein the shaft is arranged for being mechanically connected with the second blade segment (102),
wherein a pitch motor (604) of the pitch mechanism is mechanically connected with the shaft (603) for driving the shaft to rotate in the bearing (601) about axis B.

8. Segmented rotor blade according to claim 7, wherein the pitch motor (604) is supported by and mechanically connected with the second support structure (101B) of the root segment.

9. Segmented rotor blade according to one of claims 7 to 8, wherein a first shaft end (603B) of the shaft (603) perpendicular to axis B has an aerofoil shape, wherein the first shaft end is arranged for being mechanically connected with the second blade segment (102).

10. Segmented rotor blade according to one of claims 7 to 9, wherein the shaft comprises a shaft section (603C) including the first shaft end (603B), wherein the shaft section is made with a metal, steel, resin, a fabric, fibres and/or rovings.

11. Segmented rotor blade according to one of claims 7 to 10, comprising the second blade segment (102), which is mechanically connected to the first end (603B) of the shaft (603), wherein a cross section through the second blade segment and perpendicular to axis A has an aerofoil shape.

12. Segmented rotor blade according to claim 11, wherein the second blade segment comprises an aerofoil third profile at a first axial position of the second blade segment along axis A and an aerofoil fourth profile at a second axial position of the second blade segment, wherein the third profile is different from the fourth profile.

13. Segmented rotor blade according to one of claims 11 to 12, comprising a third blade segment (103) mechanically connected with an end of the second blade segment (102) and aligned with axis A, wherein a cross section through the third blade segment and perpendicular to axis A has an aerofoil shape.

14. Segmented rotor blade according to one of claims 11 to 13, comprising a tip segment or winglet (104) which is mechanically connected with an end of the second blade segment or with an end of the third blade segment.
